# EUROPÄISCHE PATENTSCHRIFT

(11) **EP 1 003 986 B1**
(45) Veröffentlichungstag und Bekanntmachung des Hinweises auf die Patenterteilung: **02.01.2002**
(21) Anmeldenummer: 98943844.5
(22) Anmeldetag: 05.08.1998
(51) Int. Cl.: F16H 61/06

(54) **SCHALTVORRICHTUNG EINES WECHSELGETRIEBES MIT DRUCKREGELVENTILEN FÜR DEN ARBEITSDRUCK UND EINEN VERSORGUNGSDRUCK**
SHIFTING DEVICE IN A VARIABLE SPEED GEARBOX WITH PRESSURE REGULATING VALVES FOR WORKING AND FEED PRESSURE
DISPOSITIF DE COMMANDE D'UNE BOITE DE VITESSES A SOUPAPES DE REGULATION DE PRESSION POUR LA PRESSION DE SERVICE ET UNE PRESSION D'ALIMENTATION

(30) Priorität: 18.08.1997 DE 19735820
(43) Veröffentlichungstag der Anmeldung: 31.05.2000
(73) Patentinhaber: DaimlerChrysler AG, 70567 Stuttgart (DE)
(72) Erfinder: BERTSCHE, Bernd, D-78532 Tuttlingen (DE); INDLEKOFER, Günter, D-75417 Mühlacker (DE); KORTENJANN, Ludger, D-70734 Fellbach (DE)
(86) Internationale Anmeldenummer: EP9804870
(87) Internationale Veröffentlichungsnummer: WO9909338

(56) Entgegenhaltungen:
- EP-A- 0 571 275
- DE-A- 3 812 003
- DE-A- 4 036 076
- DE-A- 4 320 858

## Beschreibung

Die Erfindung betrifft eine Schaltvorrichtung eines Wechselgetriebes nach dem Oberbegriff von Patentanspruch 1.

Bei einer bekannten Schaltvorrichtung der eingangs genannten Art (DE 41 24 385 C1) arbeitet das Druckregelventil für den Versorgungsdruck in Abhängigkeit von einem lastabhängigen Modulierdruck, zu dessen Erzeugung ein eigenständiges Regelsystem erforderlich ist, das die Kosten der elektrohydraulischen Steuerung erhöht und wertvollen Bauraum innerhalb der üblicher Weise verwendeten Schaltplatte im Getriebegehäuse beansprucht.
Bei der bekannten Anordnung der DE 42 41 593 A1 zum selbsttätigen Umsteuern eines Planetenräder-Gangwechselgetriebes eines Kraftfahrzeuges aus einem bisherigen alten Gang, in welchem eine erste reibschlüssige Verbindung (Kupplung oder Bremse) durch ein zugehöriges Druckmittel-Schaltstellglied eingerückt ist, in einen neuen Gang, in welchem eine zweite reibschlüssige Verbindung durch ein zugehöriges Druckmittel-Schaltstellglied eingerückt und die erste reibschlüssige Verbindung durch Abschalten des Arbeitsdruckes des zugehörigen Schaltstellgliedes ausgerückt ist, sind Mittel zum Messen des Arbeitsdruckes des Schaltstellgliedes des neuen Ganges verwendet und der Arbeitsdruck des Schaltstellgliedes des alten Ganges abgeschaltet, wenn der Arbeitsdruck des Schaltstellgliedes des neuen Ganges einen durch einen Vergleich mit einer Bezugsgröße bestimmten signifikanten Druckwert erreicht oder übersteigt. Um das Schaltstellglied des bisherigen Ganges beim Gangwechsel auch unter Berücksichtigung von Schaltkomfort und Lebensdauer der beteiligten Schaltmittel abschalten zu können, wobei der Schaltkomfort durch den sich gegebenenfalls einstellenden Schaltruck und die Lebensdauer durch zu lange Schleifzeiten der Reibflächen beeinträchtigt sein können, ist bei dieser bekannten Anordnung vorgesehen, daß die Bezugsgröße in Abhängigkeit vom Lastdrehmoment des Antriebsmotors gegebenenfalls unter Berücksichtigung des Wandlungsverhältnisses eines hydrodynamischen Drehmomentwandlers veränderlich ist und der signifikante Druckwert zu demjenigen Momentenwert des übertragbaren Momentes der reibschlüssigen Verbindung des neuen Ganges gehört, der dem momentanen Istwert des Lastmomentes entspricht. Bei dieser bekannten Anordnung wird der Arbeitsdruck der Schaltstellglieder durch von einer elekronischen Steuereinheit ansteuerbare elektromagnetische Druckregelventile eingestellt, denen ein lastabhängiger Versorgungsdruck zugeführt wird. Über die Bildung bzw. Erzeugung dieses Versorgungsdruckes ist in der Druckschrift keine Aussage getroffen.

Aus der DE 36 30 792 A1 ist schließlich noch eine gattungsfremde Einrichtung bekannt, die zur Erzeugung eines vom Betriebszustand eines Kraftfahrzeuges abhängigen Hauptdruckes zur Betätigung von Schaltgliedern eines automatischen Kraftfahrzeug-Wechselgetriebes mit einer verstellbaren Förderpumpe vorgesehen ist, bei der die Förderpumpe den Hauptdruck durch Änderung der Fördermenge einstellt und ein Steuerventil zur Lieferung eines eine Mengenverstelleinrichtung der Förderpumpe im Sinne der Verstellung der Fördermenge beaufschlagenden Pumpenverstelldruckes verwendet ist. Um mit möglichst einfachen Mitteln sicher zu stellen, daß der Hauptdruck jeweils entsprechend dem Betriebszustand des Kraftfahrzeugs optimal eingestellt wird, ist bei dieser bekannten Einrichtung eine Ausgestaltung dahingehend getroffen, daß das Steuerventil einen den Pumpenverstelldruck erzeugenden Regelkolben aufweist, der an einer Wiegefläche von dem rückgeführten Pumpenverstelldruck und an einer entgegengerichteten Wiegefläche von einem durch einen betriebszustandsabhängig veränderlichen Druck sowie den Hauptdruck beaufschlagten Steuerklolben belastet ist.

Die der vorliegenden Erfindung zugrunde liegende Aufgabe ist im wesentlichen darin zu sehen, bei einer Schaltvorrichtung der eingangs genannten Art den Aufwand für die Herstellung der Lastabhängigkeit des Versorgungsdruckes gering zu halten.
Die erläuterte Aufgabe ist gemäß der Erfindung mit den kennzeichnenden Merkmalen von Patentanspruch 1 in vorteilhafter Weise gelöst.
Die Schaltvorrichtung nach der Erfindung zeichnet sich dadurch aus, daß in jedem Gang nur eine reibschlüssige Verbindung eingerückt ist und mit Arbeitsdruck beaufschlagt wird. Die Arbeitsdrücke werden direkt von elektromagnetischen Vorsteuerventilen und zugeordneten Druckregelventilen geregelt. Die Arbeitsdrücke sind frei regelbar, sie weisen untereinander keine Abhängigkeiten auf. Die Schaltvorrichtung nach der Erfindung zeichnet sich ferner dadurch aus, daß den bspw. bei einem 6-Gang-Getriebe erforderlichen sechs reibschlüssigen Verbindungen bzw. deren Stellgliedern Arbeitsdruck durch Vermittlung von insgesamt nur drei Vorsteuerventilen und deren zugeordneten Druckregelventilen zugeführt wird. Die Zuordnung der geregelten Arbeitsdrücke zu den Stellgliedern kann über ein Handwählschieberventil und zwei Schaltventile erfolgen, die von einem Positionssteuerventil angesteuert werden.
Bei der Schaltvorrichtung nach der Erfindung werden die Stellglieder ausschließlich von den Druckregelventilen für den Arbeitsdruck mit Druck beaufschlagt. Ein Umschalten auf den Versorgungsdruck erfolgt nicht.
Die Schaltvorrichtung nach der Erfindung zeichnet sich desweiteren dadurch aus, daß nur der Arbeitsdruck der leistungsführenden reibschlüssigen Verbindung bzw. des zugehörigen Stellgliedes den jeweiligen notwendigen Versorgungsdruck bestimmt (Vorrang-Steuerung nach Patentanspruch 2).

Bei der Schaltvorrichtung nach der Erfindung ist durch eine Ventilfeder des betreffenden Druckregelventiles der Grundwert des Versorgungsdruckes festgelegt, wenn sich das Getriebe nicht in einem leistungsübertragenden Zustand befindet (Patentanspruch 6).

Der Patentanspruch 3 einerseits und die Patentansprüche 4,5 andererseits haben je eine vorteilhafte Ausführungsform der Vorrang-Steuerung bei der Schaltvorrichtung nach der Erfindung zum Gegenstand.

Die Maßnahme gemäß Patentanspruch 7 ist auf eine Sicherheitsfunktion der Schaltvorrichtung nach der Erfindung abgestellt, durch welche vermieden ist, daß das Druckregelventil für den Versorgungsdruck einen überhohen Druck ausregelt, wenn ein Druckregelventil für den Arbeitsdruck in Durchgangstellung klemmt.

Die Erfindung ist nachstehend anhand von zwei in der Zeichnung schematisch dargestellten Ausführungsformen näher beschrieben. In der Zeichnung bedeuten
- Fig. 1: eine Schaltvorrichtung nach der Erfindung in einer ersten Ausführung, dargestellt in Form eines Blockschaltbildes mit hydraulischer Vernetzung der verwendeten Ventile,
- Fig.1a: ein Druckregelventil der Schaltvorrichtung von Figur 1 in Einzeldarstellung,
- Fig. 2: eine Schaltvorrichtung nach der Erfindung in einer zweiten Ausführung, dargestellt in Form eines Blockschaltbildes mit hydraulischer Vernetzung der verwendeten Ventile, und
- Fig. 3: ein Diagramm für die Ventilkennung des Druckregelventiles für den Versorgungsdruck der Schaltvorrichtung nach der Erfindung.

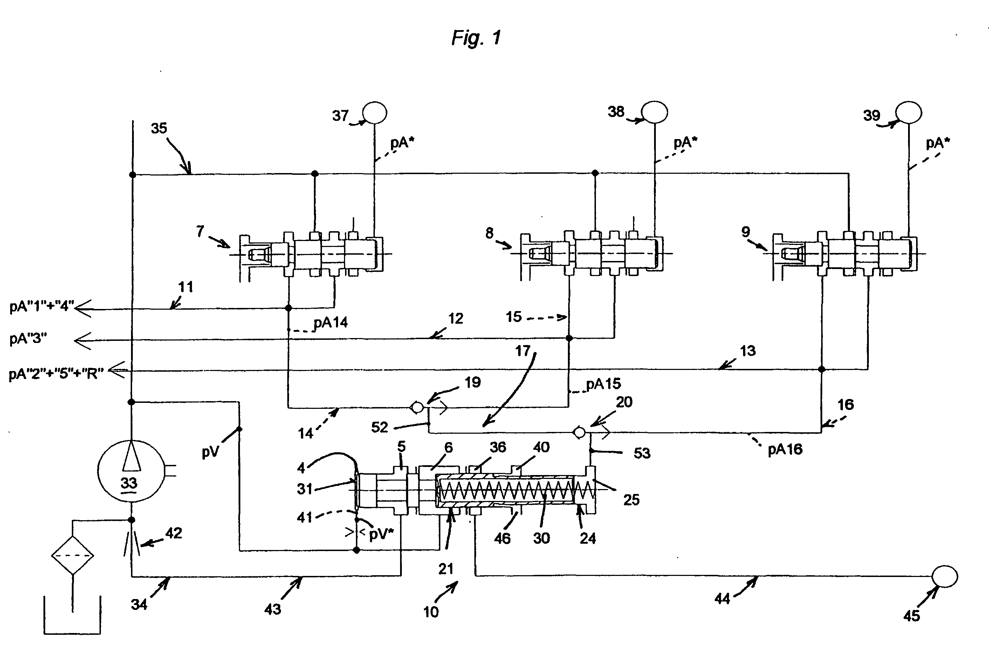

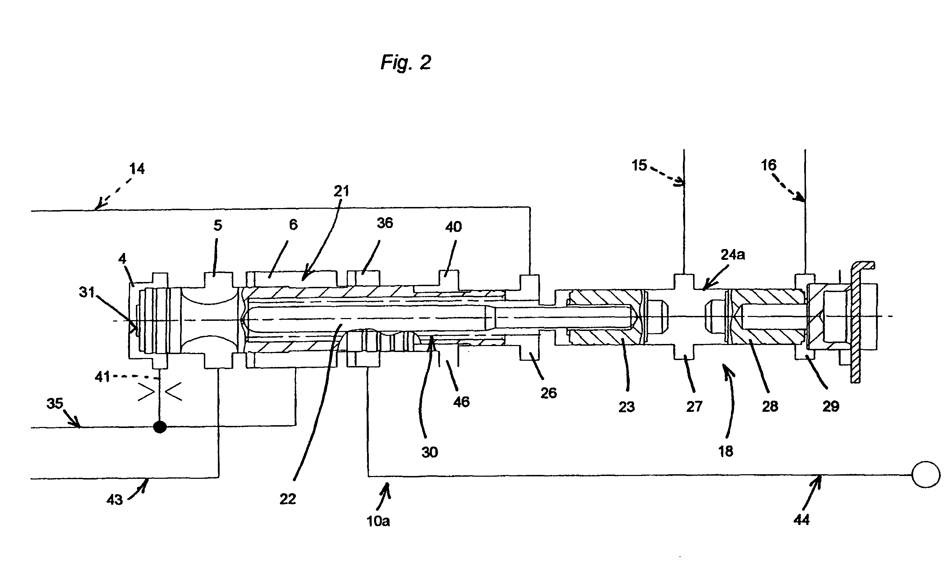

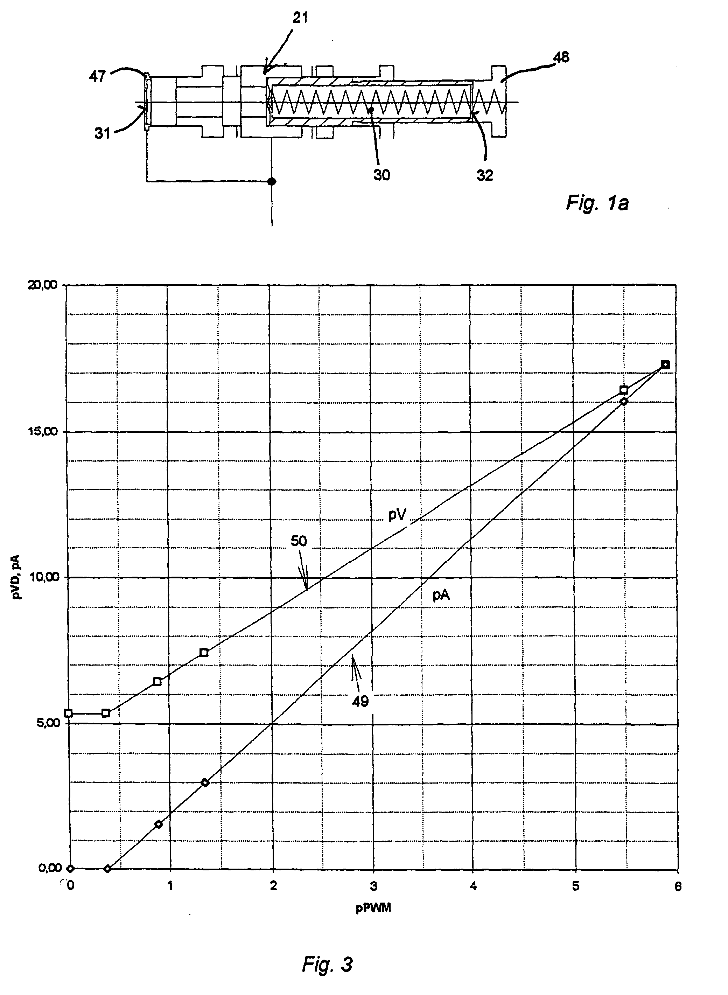

Unter Bezugnahme zunächst auf die Figur 1 wird der Versorgungsdruck pV der Schaltvorrichtung durch eine von einem Antriebsmotor ständig angetriebene Druckpumpe 33 erzeugt, welche Druckmittel aus einem Vorratsbehälter 34 ansaugt und in eine Druckleitung 35 fördert, welche an Druckregelventile 7 bis 9 für einen jeweiligen Arbeitsdruck pA und an ein Druckregelventil 10 für den Versorgungsdruck pV angeschlossen ist.
Das Druckregelventil 7 regelt den Arbeitsdruck pA einer Arbeitsdruckleitung 11 - welche den Schaltstellgliedern zum Betätigen der Vorwärts-Gängen "1" und "4" zugehörigen reibschlüssigen Verbindungen über Schaltsteuerventile und ein Handwählventil zugeordnet ist - in Abhängigkeit eines lastabhängigen Steuerdruckes pA* eines elektromagnetischen Vorsteuerventiles 37, welches von einer elektronischen Steuereinheit ansteuerbar ist.
Das Druckregelventil 8 regelt den Arbeitsdruck pA einer Arbeitsdruckleitung 12 - welche dem Schaltstellglied zum Betätigen der einem Vorwärts-Gang "3" zugehörigen reibschlüssigen Verbindung über die Schaltsteuerventile und das Handwählventil zugeordnet ist - in Abhängigkeit eines lastabhängigen Steuerdruckes pA* eines elektromagnetischen Vorsteuerventiles 38, welches von der elektronischen Steuereinheit ansteuerbar ist.
Das Druckregelventil 9 regelt den Arbeitsdruck pA einer Arbeitsdruckleitung 13 - welche den Schaltstellgliedern zum Betätigen der Vorwärts-Gängen "2" und "5" und einem Rückwärts-Gang "R" zugehörigen reibschlüssigen Verbindungen über die Schaltsteuerventile und das Handwählventil zugeordnet ist - in Abhängigkeit eines lastabhängigen Steuerdruckes pA* eines elektromagnetischen Vorsteuerventiles 39, welches von der elektronischen Steuereinheit ansteuerbar ist.

Die Druckregelventile 7 bis 9 sind noch jeweils an eine von ihrer Arbeitsdruckleitung 11 bzw. 12 bzw. 13 abgezweigte Steuerdruckleitung 14 bzw. 15 bzw. 16 angeschlossen, welche über eine Vorrang-Steuerungsanordnung 17 (18 in Figur 2) mit dem Druckregelventil 10 (10a in Figur 2) für den Vorratsdruck pV verbunden ist.

Das Druckregelventil 10(10a) weist einen Regelkolben 21 auf, welcher eine Ventilkammer 24(24a in Figur 2) in zwei zu seinen Stirnseiten liegende Steuerdruckkammern 4 und 25(26 in Figur 2),in eine weitere Steuerdruckkammer 5 sowie in drei hintereinander liegende Ventilkammern 5,6 und 36 unterteilt. Während die Steuerdruckkammer 4 an eine von der Druckleitung 35 über eine Drossel abgezweigte Steuerdruckleitung 41 angeschlossen ist, so daß der Regelkolben 21 auf seiner betreffenden Stirnseite mit der wirksamen Druckfläche 31 von einem vom Versorgungsdruck pV abhängigen Steuerdruck pV* beaufschlagbar ist, wirkt eine Ventilfeder 30 im entgegengesetzten Sinne auf den Regelkolben 21 ein. Gleichsinnig zur Ventilfeder 30 wirkt auf den Regelkolben 21 ein Steuerdruck ein, welcher aufgrund der Funktion der Vorrang-Steuerungsanordnung 17(18) von der den momentan höchsten Arbeitsdruck pA führenden Arbeitsdruckleitung 11 bzw. 12 bzw. 13 abgeleitet ist.
Die Ventilkammer 5 ist an eine Rücklaufleitung 43 angeschlossen, welche über einen Injektor 42 mit der Saugseite der Pumpe 33 verbunden ist.
Die Ventilkammer 6 ist an die Druckleitung 35 für den Versorgungsdruck pV angeschlossen.
Die Ventilkammer 36 ist an eine zu einem Schmiersystem 45 führende Zulaufleitung 44 angeschlossen.
Die Steuerdruckkammer 40 ist durch einen Null-Anschluß 46 mit der Atmosphäre verbunden.

Die in der Steuerdruckkammer 4 liegende Stirnfläche 31 des Regelkolbens 21 weist einen Durchmesser 47 auf, welcher größer ist als der Durchmesser 48 der in der Steuerdruckkammer 25 (26) liegenden Stirnfläche 32 des Regelkolbens 21. Aufgrund dieser Flächendifferenz weist das Druckregelventil 10(10a) die in Figur 3 dargestellte Ventilkennung auf, welche sich dadurch auszeichnet, daß der Verlauf 49 der der Stirnfläche 32 zugeordneten Steuerdruckkraft pA·F32 über dem Ventilweg s steiler ist als der Verlauf 50 der der Stirnfläche 31 zugeordneten Steuerdruckkraft pV*·F31. Auf diese Weise wird der Versorgungsdruck pV auf einen dem Maximalwert 51 entsprechenden Wert begrenzt, wenn eines der Druckregelventile 7 bis 9 in Durchgangstellung klemmen sollte, so daß ein Überdruckventil nicht erforderlich wird.

In der bisher beschriebenen Anordnung und Ausführung stimmen die beiden Schaltvorrichtungen der Figuren 1 und 2 überein.

Die beiden Ausführungsformen unterscheiden sich durch die Art ihrer Vorrang-Steuerungsanordnung 17(18).

Bei der Vorrang-Steuerungsanordnung 17 der Figur 1 sind die Steuerdruckleitungen 14 und 15 der Druckregelventile 7 und 8 durch ein 3/2-Wege-Wechselsperrventil 19 so mit einer Steuerdruck-Zwischenleitung 52 verbunden, daß diese Zwischenleitung 52 stets mit der den höheren Druck führenden Steuerdruckleitung 14 oder 15 kommuniziert. Die Steuerdruck-Zwischenleitung 52 und die Steuerdruckleitung 16 des Druckregelventiles 9 sind durch ein 3/2-Wege-Wechselsperrventil 20 so mit einer zur Steuerdruckkammer 25 führenden Steuerdruck-Ausgangsleitung 53 verbunden, daß die Steuerdruckkammer 25 stets mit der den höheren Druck führenden Leitung 16 oder 52, d.h. mit der den höchsten Druck führenden Steuerdruckleitung 14 oder 15 oder 16 kommuniziert.

Wirkungsweise am Beispiel einer Schaltung vom "2." Gang in den "3." Gang :

Im "2." Gang regelt das Vorsteuerventil 39 mit dem angeschlossenen Druckregelventil 9 den Arbeitsdruck pA des Stellgliedes der zugehörigen reibschlüssigen Verbindung. Über das Wechselsperrventil 20 wird der vom Arbeitsdruck pA abgeleitete Steuerdruck pA16 zum Druckregelventil 10 geführt und bestimmt dort die Höhe des Versorgungsdruckes pV. Während der Schaltung wird der Arbeitsdruck pA in der zum Stellglied des "3." Ganges führenden Arbeitsdruckleitung 12 durch das Vorsteuerventil 38 und das angeschlosene Druckregelventil 8 erhöht und der Arbeitsdruck pA in der Arbeitsdruckleitung 13 des "2." Ganges durch das Vorsteuerventil 39 verringert. Bei Druckgleichheit in den Arbeitsdruckleitungen 12 und 13 schaltet das Wechselsperrventil 20 um, so daß nun der Arbeitsdruck pA der Arbeitsdruckleitung 12 zusammen mit der Ventilfeder 30 regelbestimmend auf den Regelkolben 21 des Druckregelventiles 10 wirkt.

Bei der Vorrang-Steuerungsanordnung 18 der Figur 2 sind die Steuerdruckleitung 14 des Druckregelventiles 7 an die Steuerdruckkammer 26 des Druckregelventiles 10a und die Steuerdruckleitungen 15 und 16 der Druckregelventile 8 und 9 an je eine weitere Steuerdruckkammer 27 und 29 des Druckregelventiles 10a angeschlossen. Die Steuerdruckkammern 26 und 27 des Druckregelventiles 10a sind durch einen in der Ventilkammer 24a axial verschiebbar angeordneten Vorrang-Steuerkolben 23 voneinander getrennt, welcher über eine Druckstange 22 gegenüber dem Regelkolben 21 starr abstützbar ist. Die Steuerdruckkammern 27 und 29 sind durch einen weiteren in der Ventilkammer 24a axial verschiebbar angeordneten Vorrang-Steuerkolben 28 voneinander getrennt, welcher über den Steuerkolben 23 und die Druckstange 22 ebenfalls starr gegenüber dem Regelkolben 21 abstützbar ist. Wenn die Steuerdruckleitung 14 den höchsten Druck führt, stützt sich der Steuerkolben 23 über den Steuerkolben 28 gegenüber dem Ventilgehäuse in der vom Regelkolben 21 weg weisenden Richtung starr ab. Sofern die Steuerdruckleitung 15 den höchsten Druck führt, stützen sich der Steuerkolben 23 gegenüber dem Regelkolben 21 und der Steuerkolben 28 in der entgegengesetzten Richtung gegenüber dem Ventilgehäuse jeweils starr ab. Wenn die Steuerdruckleitung 16 den höchsten Druck führt, stützt sich der Steuerkolben 28 über den Steuerkolben 23 gegenüber dem Regelkolben 21 starr ab. Auf diese Weise wird der Regelkolben 21 stets von dem Steuerdruck des den höchsten Arbeitsdruck pA einregelnden Druckregelventiles 7 oder 8 oder 9 betätigt.

Wirkungsweise am Beispiel einer Schaltung vom "2." Gang in den "3." Gang :
Im "2." Gang wirkt der Arbeitsdruck pA der Arbeitsdruckleitung 13 über den abgeleiteten Steuerdruck pA16 der Steuerdruckleitung 16 auf den Steuerkolben 28. Dessen Kolbenkraft wirkt dabei über den Steuerkolben 23 und die Druckstange 22 zusammen mit der Ventilfeder 30 am Regelkolben 21 entgegen dem von dem Versorgungsdruck pV abgeleiteten Steuerdruck pV*. Während der Schaltung wird der Arbeitsdruck pA der Arbeitsdruckleitung 13 des "2." Ganges durch das Vorsteuerventil 38 und das angeschlossene Druckregelventil 8 erhöht und der Arbeitsdruck pA der Arbeitsdruckleitung 13 des "2." Ganges durch das Vorsteuerventil 39 verringert. Sobald der Arbeitsdruck pA der Arbeitsduckleitung 12 den Arbeitsdruck pA der Arbeitsdruckleitung 13 übersteigt, trennen sich die Steuerkolben 23 und 28, so daß der Arbeitsdruck pA der Arbeitsdruckleitung 12 über den abgeleiteten Steuerdruck pA15 unter Vermittlung des Steuerkolbens 23 und der Druckstange 22 zusammmen mit der Ventilfeder 30 regelbestimmend auf den Regelkolben 21 des Druckregelventiles 10 für den Versorgungsdruck pV wirkt.

## Patentansprüche

1. Schaltvorrichtung eines Wechselgetriebes mit einer reibschlüssigen Verbindung, durch deren Einrücken eine zugeordnete Getriebeübersetzung wirksam wird, mit einem Druckmittel-Stellglied zum Betätigen der reibschlüssigen Verbindung und einem den Arbeitsdruck (pA"1"+"4" oder pA"3" oder pA"2"+"5"+"R") des Stellgliedes in Abhängigkeit von einer elektronischen Steuereinheit einstellenden Druckregelventil (7 oder 8 oder 9), dessen Versorgungsdruck (pV) durch ein zugehöriges Druckregelventil (10 oder 10a) nach Maßgabe eines lastabhängigen Steuersignales eingestellt wird,
**dadurch gekennzeichnet,**
**daß** für das lastabhängige Steuersignal ein vom Arbeitsdruck (pA) abgeleiteter Steuerdruck (pA14 oder pA15 oder pA16) verwendet ist.

2. Schaltvorrichtung nach Patentanspruch 1,
**dadurch gekennzeichnet,**
**daß** das Druckregelventil (10,10a) für den Versorgungsdruck (pV) durch eine nach Art einer Druckwaage arbeitende Vorrang-Steuerungsanordnung (17 oder 18) mit den jeweils einen vom betreffenden Arbeitsdruck (pA) von wenigstens zwei Stellgliedern (Arbeitsdruckleitungen 11 bis 13) zum Betätigen je einer einer bestimmten Getriebeübersetzung (Gänge "1" und "4" oder "3" oder "2" und "5" und "R") zugeordneten reibschlüssigen Verbindung abgeleiteten Steuerdruck (pA14 bis pA16) führenden Steuerdruckleitungen (14 bis 16) verbunden ist.

3. Schaltvorrichtung nach Patentanspruch 2,
**dadurch gekennzeichnet,**
**daß** für die Vorrang-Steuerungsanordnung (17) wenigstens ein 3/2-Wege-Wechselsperrventil (19 und 20) verwendet ist.

4. Schaltvorrichtung nach Patentanspruch 2,
**dadurch gekennzeichnet,**
**daß** ein Regelkolben (21) des Druckregelventiles (10a) für den Versorgungsdruck (pV) und ein Vorrang-Steuerkolben (23) in Tandemanordnung in und relativ zu einer Ventilkammer (24a) sowie relativ zueinander axialverschiebbar angeordnet sind und eine erste Steuerdruckkammer (26) zwischen sich einschließen, daß der Vorrang-Steuerkolben (23) mit seinem dem Regelkolben (22) abgewendeten Stirnende eine zweite Steuerdruckkammer (27) in der Ventilkammer (24a) abschließt, daß beide Steuerdruckkammern (26 und 27) an je eine reibschlüssigen Verbindungen zugehörige Steuerdruckleitung (14 und 15) angeschlossen sind, und daß der Vorrang-Steuerkolben (23) gegenüber dem Regelkolben (22) in der auf den Regelkolben weisenden Richtung starr abstützbar ist.

5. Schaltvorrichtung nach Patentanspruch 4,
**dadurch gekennzeichnet,**
**daß** die zweite Steuerdruckkammer (27) durch einen in der Ventilkammer (24a) axialverschiebbar angeordneten zweiten Vorrang-Steuerkolben (28) gegenüber einer dritten Steuerdruckkammer (29) der Ventilkammer (24a) abgeteilt ist, welche an eine reibschlüssigen Verbindungen zugehörige dritte Steuerdruckleitung (16) angeschlossen ist, und daß der zweite Vorrang-Steuerkolben (28) in der auf den Regelkolben (22) weisenden Richtung gegenüber dem ersten Vorrang-Steuerkolben (23) starr abstützbar ist.

6. Schaltvorrichtung nach einem der Patentansprüche 1 bis 5,
**dadurch gekennzeichnet,**
**daß** das Druckregelventil (10,10a) für den Versorgungsdruck (pV) durch federnde Mittel (30) sowie durch den vom jeweiligen Arbeitsdruck (pA) abgeleiteten Steuerdruck (pA14 bis pA16) im Sinne einer Erhöhung des Versorgungsdruckes (pV) - dagegen durch einen vom Versorgungsdruck (pV) abhängigen Steuerdruck (pV*) im Sinne einer Verringerung des Versorgungsdruckes (pV) beeinflußt ist.

7. Schaltvorrichtung nach Patentanspruch 6,
**dadurch gekennzeichnet,**
**daß** die auf den Regelkolben (21) des Druckregelventiles (10,10a) für den Versorgungsdruck (pV) wirksame Steuerdruckfläche (31) für den vom Versorgungsdruck (pV) abhängigen Steuerdruck (pV*) größer ist als die auf denselben Regelkolben wirksame Steuerdruckfläche (32) für den vom jeweiligen Arbeitsdruck (pA) abgeleiteten Steuerdruck (pA14 bis pA16).

## Claims

1. Switching system of a change-speed gearbox with a frictional connection, engagement of which causes an associated gear ratio to become effective, having a pneumatic actuator for operating the frictional connection and a pressure-regulating valve (7 or 8 or 9) which adjusts the working pressure (pA"1"+"4" or pA"3" or pA"2"+"5"+"R") of the actuator depending on an electronic control unit, the supply pressure (pV) of which is adjusted by means of an associated pressure-regulating valve (10 or 10a) on the basis of a load-dependent control signal,
**characterised in that**
a control pressure (pA14 or pA15 or pA16) derived from the working pressure (pA) is used for the load-dependent control signal.

2. Switching system as claimed in claim 1,
**characterised in that**
the pressure-regulating valve (10, 10a) for the supply pressure (pV) is connected by means of a priority control system (17 or 18) operating as a type of pressure balance to the control pressure lines (14 to 16) conveying the control pressure (pA14 to pA16) derived respectively from the relevant working pressure (pA) of at least two actuators (working pressure lines (11 to 13) in order to operate a respective frictional connection assigned to a respective specific gear ratio (speed "1" and "4" or "3" or "2" and "5" and "R").

3. Switching system as claimed in claim 2,
**characterised in that**
at least one 3/2-way change-over check valve (19 and 20) is used for the priority control system (17).

4. Switching system as claimed in claim 2,
**characterised in that**
a regulating piston (21) of the pressure-regulating valve (10a) for the supply pressure (pV) and a priority control piston (23) in a tandem arrangement are disposed so as to be axially slidable in and relative to a valve chamber (24a) and relative to one another and enclose a first control pressure chamber (26) between them, the end face of the priority control piston (23) remote from the regulating piston (22) closes off a second control pressure chamber (27) in the valve chamber (24a), both control pressure chambers (26 and 27) are connected to a control pressure line (14 and 15) associated respectively with frictional connections and the priority control piston (23) is rigidly supportable relative to the regulating piston (22) in the direction pointing towards the regulating piston.

5. Switching system as claimed in claim 4,
**characterised in that**
the second control pressure chamber (27) is separated by means of an axially slidable second priority control piston (28) disposed in the valve chamber (24a) from a third control pressure chamber (29) of the valve chamber (24a), which is connected to a third control pressure line (16) associated with frictional connections and the second priority control piston (28) is rigidly supportable relative to the first priority control piston (23) in the direction pointing towards the regulating piston (22).

6. Switching system as claimed in one of claims 1 to 5,
**characterised in that**
the pressure regulating valve (10, 10a) for the supply pressure (pV) is acted on by biassing means (30) and by the control pressure (pA14 to pA16) derived from the respective working pressure (pA) in the direction of an increase in the supply pressure (pV) - and on the other hand by a control pressure (pV*) dependent on the supply pressure (pV) in the direction of a reduction in the supply pressure (pV).

7. Switching system as claimed in claim 6,
**characterised in that**
the control pressure surface (31) acting on the regulating piston (21) of the pressure regulating valve (10, 10a) for the supply pressure (pV) is greater for the control pressure (pV*) dependent on the supply pressure (pV) than the control pressure surface (32) acting on the same regulating piston for the control pressure (pA14 to pA16) derived from the respective working pressure (pA).

## Revendications

1. Dispositif de commande d'une boîte de vitesses, comprenant une liaison par friction, par embrayage de laquelle un rapport de transmission est actif, un vérin de fluide de pression pour actionner la liaison par friction et une soupape de régulation de pression (8 ou 9 ou 9) réglant la pression de travail (pa"1"+"4" ou pA"3" ou pA"2"+"5"+"R") du vérin en fonction d'une unité de commande électronique, et dont la pression d'alimentation (pV) est réglée par une soupape de réglage de pression (10 ou 10a) selon un signal de commande dépendant de la charge, **caractérisé en ce qu'**on utilise pour le signal de commande dépendant de la charge une pression de commande (pA14 ou pA15 ou pA16) dérivée de la pression de travail (pA).

2. Dispositif de commande selon la revendication 2, **caractérisé en ce que** la soupape de réglage de pression (10, 10a) pour la pression d'alimentation (pV) est reliée, par un agencement de commande prioritaire (17 ou 18) travaillant à la manière d'une balance de pression, avec les conduites de pression de commande (14 à 16), transportant chacune une pression de commande (pA14 à pA16) dérivée de la pression de travail concernée (pA) d'au moins deux vérins (conduites de pression de travail (11 à 13)) pour actionner chacun une liaison par friction associée à un rapport de transmission déterminé (vitesses "1" et "4" ou "3" ou "2" et "5" et "R").

3. Dispositif de commande selon la revendication 2, **caractérisé en ce qu'**on utilise pour l'agencement de commande de priorité (17) au moins une soupape de blocage à trois voies/deux positions (19 et 20).

4. Dispositif de commande selon la revendication 2, **caractérisé en ce qu'**un piston de régulation (21) de la soupape de régulation de pression (10a), pour la pression d'alimentation (pV) et un piston de commande prioritaire (23) sont agencés en disposition tandem dans et par rapport à une chambre de soupape (24a) ainsi qu'à déplacement axial l'un par rapport à l'autre, et enferment entre eux une première chambre de pression de commande (26), **en ce que** le piston de commande prioritaire (23) ferme avec son extrémité frontale détournée du piston de régulation (22) une deuxième chambre de pression de commande (27) dans la chambre de soupape (24a), **en ce que** les deux chambres de pression de commande (26 et 27) sont raccordées à une conduite de pression de commande (14 et 15) respective associée aux liaisons par friction, et **en ce que** le piston de commande prioritaire (23) peut être soutenu de manière rigide par rapport au piston de régulation (22) dans la direction tournée vers le piston de régulation.

5. Dispositif de commande selon la revendication 4, **caractérisé en ce que** la deuxième chambre de pression de commande (27) est divisée par un deuxième piston de commande prioritaire disposé à déplacement axial dans la chambre de piston (24a) par rapport à une troisième chambre de pression de commande (29) de la chambre de soupape (24a), laquelle est raccordée à une troisième conduite de pression de commande (16) associée aux liaisons par friction, et **en ce que** le deuxième piston de commande prioritaire (28) peut être soutenu de manière rigide par rapport au premier piston de commande prioritaire (23) dans la direction tournée vers le piston de régulation.

6. Dispositif de commande selon l'une quelconque des revendications 1 à 5, **caractérisé en ce que** la soupape de régulation de pression (10, 10a) pour la pression d'alimentation (pV) est influencée soit par des moyens élastiques (30) ainsi que par la pression de commande (pA14 à pA16) dérivée de la pression de travail (pA) respective dans le sens d'une augmentation de la pression d'alimentation (pV), soit au contraire par une pression de commande (pV*) dépendant de la pression d'alimentation (pV) dans le sens d'une réduction de la pression d'alimentation (pV).

7. Dispositif de commande selon la revendication 6, **caractérisé en ce que** la surface de pression de commande (31) agissant sur le piston de régulation (21) de la soupape de régulation de pression (10, 10a) pour la pression d'alimentation (pV) est plus grande pour la pression de commande (pV*) dépendant de la pression d'alimentation (pV) que la surface de pression de commande (32) agissant sur le même piston de régulation pour la pression de commande (pA14 à pA16) dérivée de la pression de travail (pA) respective.
